# EUROPEAN PATENT APPLICATION

(11) **EP 2 309 452 A1**
(43) Date of publication of application: **13.04.2011**
(21) Application number: 09290747.6
(22) Date of filing: 28.09.2009
(51) Int. Cl.: G06T 7/00

(54) **Method and arrangement for distance parameter calculation between images**

(71) Applicant: Alcatel Lucent, 75008 Paris (FR)
(72) Inventor: Tytgat, Donny, 9000 Gent (BE); Macq, Jean-François, 1083 Ganshoren (BE); Lievens, Sammy, 2930 Brasschaat (BE)
(74) Representative: Vandenbroeck, Josiane Anne Marie

(57) **Abstract**

Method for determining a distance parameter (d(m,n)) for at least one pixel block comprised in a first image with respect to at least one other image, said method including a step of dividing said respective images into at least one segment in accordance to respective predetermined segmentation criteria, a step of comparing at least one segment of the first image with at least one segment of said other image such as to derive from said comparison the distance parameter for at least one pixel block comprised within said at least one segment of said first image. An arrangement for performing this method is disclosed as well.

## Description

The present invention relates to a method and apparatus for determining a distance parameter for at least one pixel block comprised in a first image with respect to at least one other image. A pixel block is to be understood as either one pixel or a part of the image the pixel belongs to and comprising this pixel itself. Such a pixel block can e.g. have the form of a rectangular structure surrounding or comprising the pixel at one of its edges, but other geometrical structures may as well be envisaged.

Determination of such a distance parameter is used, e.g. during encoding of digital media files such as video or during analysis and processing of stereo images.

Indeed, present standard encoding methods of multimedia streams such as audio or video streams, and more in particular the H.264/AVC video coding standard, describe advanced compression techniques that were developed to enable transmission of video or audio signals at a lower bit rate. This standard defines the syntax of the encoded video bitstream along with a method of decoding the bitstream. Each video frame or image is thereby subdivided and encoded at the macroblock level, where each macroblock is e.g. a 16x16 block of pixels. Each macroblock is either encoded in "intra-prediction" mode in which the prediction of the macroblock is formed based on reconstructed macroblocks in the current frame, or "inter-prediction" mode in which the prediction of the macroblock is formed based on blocks of pixels in already encoded and reconstructed frames, called reference frames. The inter-prediction coding mode is based on temporal prediction in which the encoded macroblock is predicted from samples in previous and/or future reference frames, and wherein motion vectors are used to indicate the distance between a part of the macroblock in the frame to be encoded with respect to a best matching part of the same size in the reference frame or frames. Such part of a macroblock is in present encoders also generally denoted as a block. In the present techniques the motion vector corresponding to a pixel block distance is calculated as the distance, expressed in numbers of pixels in the horizontal and vertical directions, between a block and a best matching block in the reference frame. To find such a best-matching block, all blocks of the same size and dimensions in the reference frame are each compared with the block surrounding or comprising the current pixel, by a block -based matching algorithm. Such block-based matching techniques however require a lot of processing power and effort.

Such block-based matching algorithms are also used e.g. in the calculation of the disparity between two images of a stereo camera-pair. The disparity corresponds with the distance, generally expressed in number of pixels in horizontal and vertical direction, between a pixel in a first image and a corresponding pixel in another image. In stereo camera pairs in general a left and a right image are provided and either one of them can be selected as the first image. In case these images had undergone an earlier processing step of rectification, generally only a horizontal displacement is to be determined between the two rectified input images.

In order to find the corresponding pixel between both images some fixed-sized or variable sized blocks are then positioned around these pixels, after which a block-based matching algorithm will again determine which blocks within both images best match.

A drawback of these prior art techniques for determining distance parameters is that they are thus all based on block matching techniques. It is known that, depending on the content of the blocks to be compared, sometimes no matching block or corresponding pixel is found at all, despite having spent a substantial amount of processing effort for the block comparison, which is furthermore repeated during next comparison cycles for determining an optimum block size. In some cases, e.g. during stereo image analysis, incorrect results for the disparity values can then be provided. If these disparity values are further used e.g. for generating 3D images, these will be noisy which is highly undesirable.

An object of the present invention is therefore to present an improved technique for determination of a distance parameter, which solves the above drawbacks of the prior art, thus resulting in a much higher accuracy for the obtained distance parameter while simultaneously substantially reducing the processing time and effort.

According to the invention this object is achieved by the method including a step of dividing said respective images into at least one segment in accordance to respective predetermined segmentation criteria, a step of comparing at least one segment of the first image with at least one segment of said other image such as to derive from said comparison the distance parameter for at least one pixel block comprised within said at least one segment of said first image.

Segmentation operations are requiring less processing effort compared to block matching techniques. By further comparing at the segment level and not at the pixel block level, the amount of comparison operations is also significantly reduced. Furthermore comparison at the segment level will enable to maintain and identify the edges of the original image, which is important for applications such as three-dimensional geometry extraction and object recognition, and which significantly improves the accuracy.

The comparison of the segments of said images is performed in accordance with a predetermined segment matching strategy taking into account interrelationships between segments within the respective images.

Taking into account the interrelationships which result from the segmentation processes will prevent unnecessary comparisons from being performed, again adding to the speed of the method.

The distance parameter is calculated as the pixel distance between corresponding predetermined attributes of at least one set of matching segments from each image, said set of matching segments resulting from said comparison step.

Such attributes can be the center of gravity of matching segments, but other attributes such as smallest bounding box or many others can be used as attributes for calculating pixel distances.

The segment matching strategy involves a searching strategy and a comparison criterion strategy.

This searching strategy again may preferably take the interrelationships between segments into account, thereby avoiding unnecessary comparison steps. The comparison criterion strategy may involve the selection of a metric indicative of the similarity between segments of both images. Various shape metrics can thereby be used to evaluate this similarity between segments in both images such as similarity in segment size expressed in number of pixels, similarity of average segment colour, similarity of axis of least inertia, similarity of smallest bounding boxes etc., or any combination thereof.

An initial comparison step of the images can be performed before the segmentation and the result of this comparison can be used for optimizing said segmentation operation.

This may for instance be appropriate in case one of the images had undergone some preprocessing operation, e.g. an auto-adjust or auto-correction operation automatically performed by a camera. In that case the segmentation criteria for both segmentation operations should be adapted such that the results of both segmentation operations on the respective images are comparable, e.g. will enable the respective segments to be compared for similarities. Alternatively an extra preprocessing step on one or both images can also be performed such as to guarantee the segmentation operations yielding comparable segments.

The method can be used for calculating a motion vector during encoding of a video stream, or for calculation of a disparity parameter during processing of stereo images.

Especially for the latter application the distance parameters are calculated for all pixel blocks within the first image.

The present invention relates as well to an arrangement for performing the present method, and to a video encoder and an image analyzer for incorporating such an arrangement.

It is to be noticed that the term 'coupled', used in the claims, should not be interpreted as being limitative to direct connections only. Thus, the scope of the expression 'a device A coupled to a device B' should not be limited to devices or systems wherein an output of device A is directly connected to an input of device B. It means that there exists a path between an output of A and an input of B which may be a path including other devices or means.

It is to be noticed that the term 'comprising', used in the claims, should not be interpreted as being limitative to the means listed thereafter. Thus, the scope of the expression 'a device comprising means A and B' should not be limited to devices consisting only of components A and B. It means that with respect to the present invention, the only relevant components of the device are A and B.

The above and other objects and features of the invention will become more apparent and the invention itself will be best understood by referring to the following description of an embodiment taken in conjunction with the accompanying drawings wherein
Fig. 1 shows a high level schematic of an embodiment of the method,
Fig. 2a shows a high level embodiment for performing the segment matching step of Fig. 1,
Fig. 2b shows a possible implementation for performing the embodiment shown in Fig. 2a,
Fig. 3a shows a high level embodiment for the calculation of the distance parameter,
Fig. 3b shows a possible implementation for performing the method of Fig. 3a,
Fig. 4 shows how this method can be applied during calculation of motion vectors when encoding video ,
Fig. 5 shows another example of the method being applied to the calculation of disparity values during processing of stereo camera pair images,
Fig. 6 shows a high level embodiment of an arrangement according to the invention,
Fig. 7A-c show two simple images on which the method is applied, as well as the different matches at the different hierarchical segmentation levels.

The description and drawings merely illustrate the principles of the invention. It will thus be appreciated that those skilled in the art will be able to devise various arrangements that, although not explicitly described or shown herein, embody the principles of the invention and are included within its spirit and scope. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

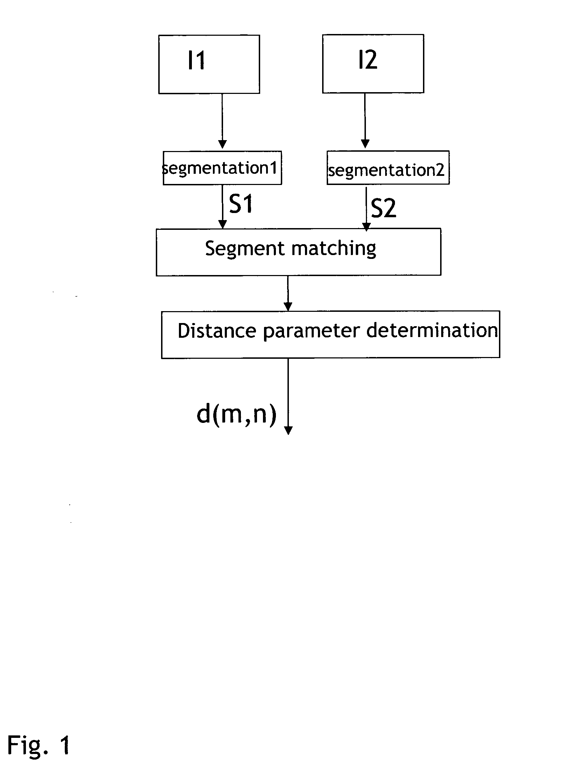

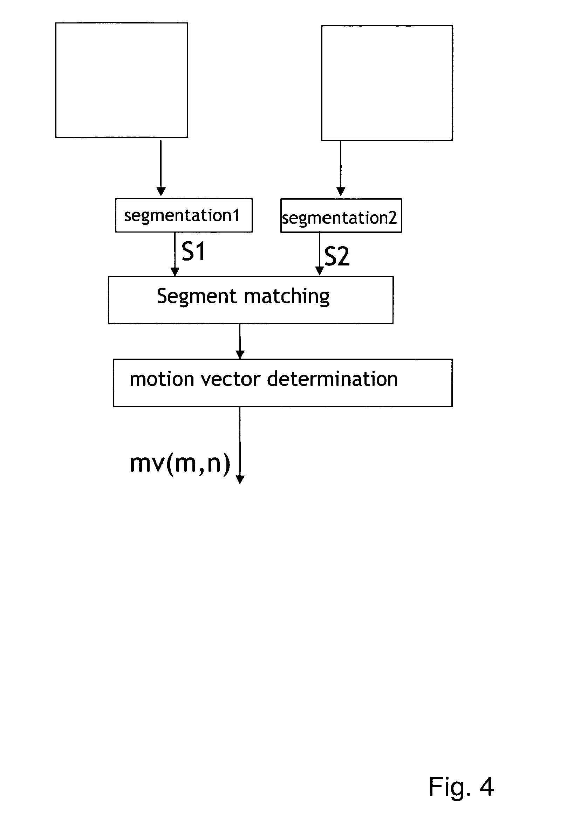

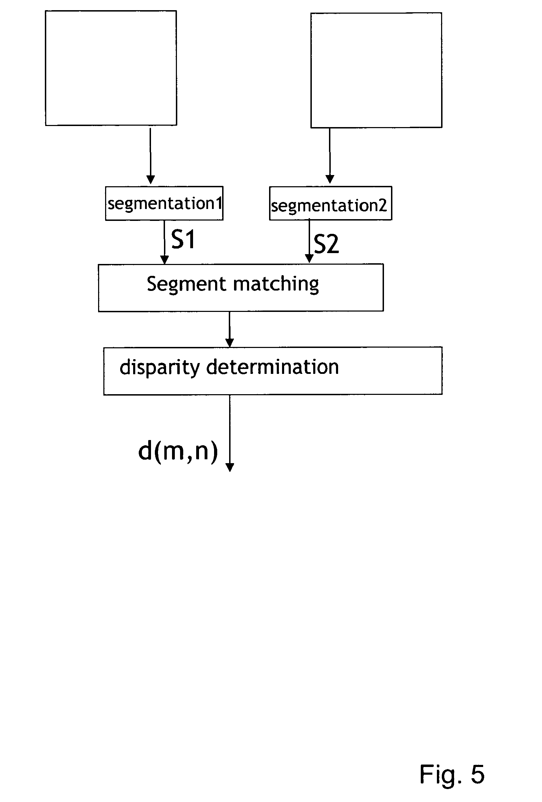

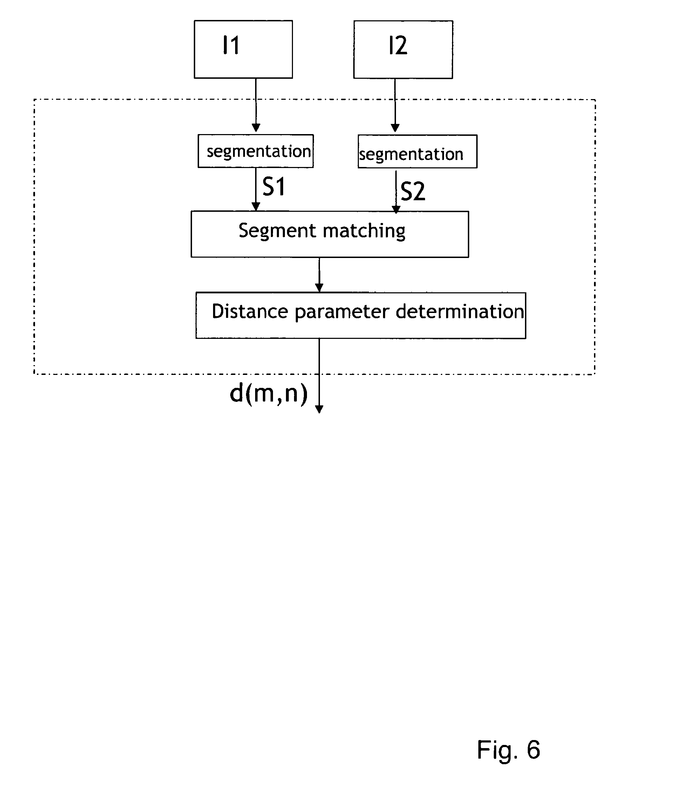

Fig. 1 depicts a high-level schematic of the method which can be used e.g. in an embodiment for calculation motion vectors during encoding of video as will be shown more explicitly in Fig. 4. However this high level schematic can also be used in an embodiment for calculation of disparity values during processing of stereo images, as will be shown more explicitly in Fig.5. Fig. 6 represents a high level schematic embodiment of an arrangement A for performing the embodiment of the method of Fig. 1.

In general embodiments the method and arrangement aim at calculating or determining, for individual pixel blocks, a distance parameter with respect to a corresponding pixel block in one or more other images. A pixel block can thus be a single pixel or a group of neighbouring pixels. In fig. 1 the distance parameter is denoted d(m,n) with d denoting the distance parameter itself and m and n indicating pixel block coordinates or coordinates which are related to the pixel blocks, e.g. coordinates of the central pixel or of some border pixels or of some geometrical figure surrounding the pixel block . The distance parameter d itself can be expressed in the form of a number of pixels in the vertical and horizontal dimensions, referring to differences in coordinates between the corresponding pixel blocks in both images, but d can also be expressed as the mathematical distance calculated or derived from these coordinates, or as this mathematical distance together with a direction or orientation vector, which are again mathematically related to these coordinates. Depending on the specific applications one or several of these mathematical expressions will be used for denoting this distance parameter.

Contrary to the well-known concept of block matching used for the determination of these distance parameters such as motion vectors or disparity values used in prior art techniques, embodiments of the present method make use of segmentation graphs or trees or equivalent representations thereof, obtained after having subjected the images I1 and I2 between which the distance parameters are to be determined, to such a segmentation operation. With segmentation is meant the division of the image into parts or segments of arbitrary dimensions, possibly, but not necessarily, at different hierarchical levels, and whereby the pixels are having similar attributes. In most segmentation methods pixels belonging to the same segment are all coupled or interconnected to each other, meaning that they form part of one homogeneous figure, but in other segmentation method variants also non-neighbouring or noninterconnected pixels can belong to the same segment.

The attributes on which basis the segments are obtained can be variable and are an input parameter or criterion of the segmentation process. By e.g. using "colour " as this criterion, all connected pixels within the image having the same colour, will be part of the same segment in one variant segmentation method. As in practice identical colours are not always present, this can also be realized in practice by checking the colour attribute values of the pixels such that connected pixels having a colour attribute value difference that does not exceed a certain threshold, are considered as having the same colour, and thus belong to a same segment. Another possibility on which basis the segments can be determined is e.g. based on frequency analysis techniques whereby connected pixels having e.g. low spatial frequencies are grouped together into one segment. Low spatial frequency content reflects itself as low texture, again pertaining to visual objects of similar colour, of which the edges, representing high frequency content, are omitted.

During the segmentation process the criteria or the thresholds themselves can also vary from one segmentation level to another. In case colour difference is e.g. as the criterion, the colour difference for determining segments at a high layer, thus in the beginning of the segmentation process, may be larger compared to the colour difference threshold applied for determining segments at the lower layers , thus at the end of the segmentation process.

The result of such a segmentation operation is a list or a set of segments, together with an indication of which pixels belong to which segments, and with an indication of the internal interrelations between the segments. Remark that in some cases, e.g. in cases where the image contains a set of completely identical pixels, the segmentation result will only comprise one segment, being the starting image itself.

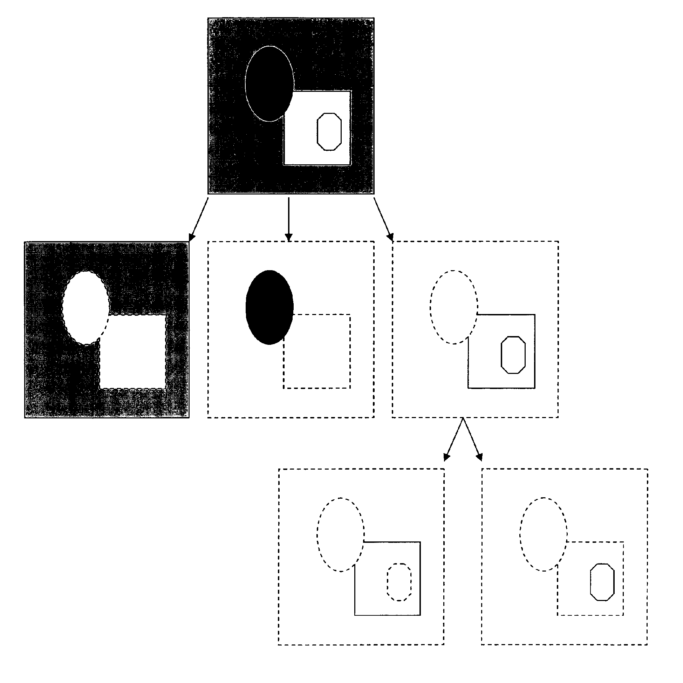

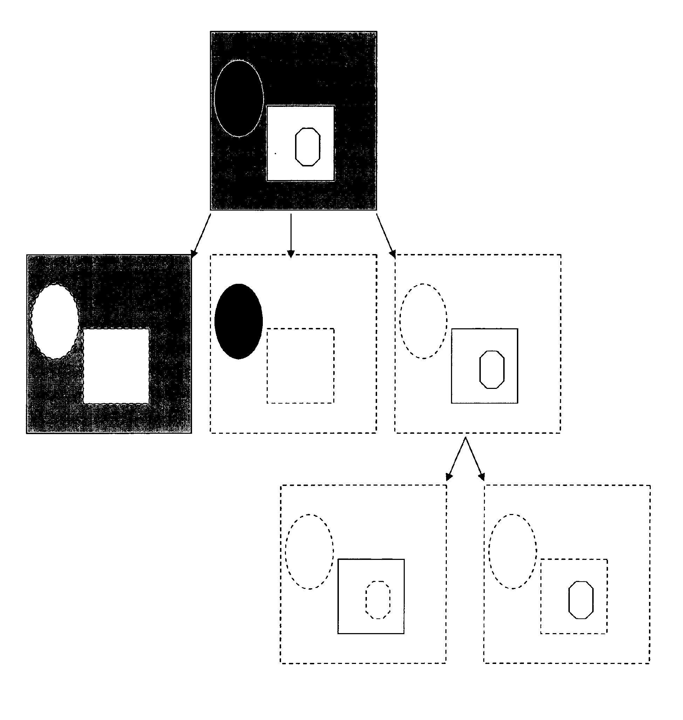

The segmentation result can also be represented under the form of a segmentation graph, under the form of a segmentation tree in case some hierarchical relationships exist between different segments, or under any other form indicating or representing these segments, their relationships, and how the pixels relate to them. Figs 7a and 7b illustrate this concept. At the top of both figures the original images are shown : Fig. 7a shows the first image, and fig. 7b the second one. Both images display a dark grey background, a black circle , a light grey rectangle, with inside this rectangle a white octagon. The segmentation process for both figures is based on grey values similarity, with grey value threshold limits varying itself during the segmentation process. The result is a segmentation tree starting from the highest layer 0, with a segment representing the original figure itself and denoted segment01. At the first level 1 the dark grey background appears as a first segment within this layer, denoted segment11, the dark circle appears as a second segment within this layer, denoted segment 12, and the light grey rectangle with the white octagon inside appears as a third segment, denoted segment 13. Remark that the numbers of the segments refer both to their level and to their numbering within the level. This third segment 13 can be further segmented, based on now refined threshold criteria, allowing to better discriminate between several figures having more similar grey values, into two segments, but situated at a lower hierarchical level , being indicated by a higher number level 2. At this level 2 a first segment denoted 21 comprises the light grey rectangle without the white octagon, and a second segment 22 comprises the white octagon itself.

Remark that even the criterion used for determining the different segments can be adapted during the segmentation phases. So while initially grey values lying within some boundary values could be the criterion, in a next phase related to the next level high frequency content could be used, to further discriminate edges or boundaries etc.

The second image I2. undergoes a similar segmentation operation, resulting in the list of 6 segments as shown in Fig. 7b.

In the example shown in Figs 7a and b, both images were subjected to a similar segmentation operation. This is the case for images which are generated in the same way, e.g., using the same video camera and showing only slightly deviations as taken very shortly one after the other, or taken simultaneously as from e.g. a multiple view camera. However in some cases both images are not generated in this way e.g. one image may have already undergone a kind of auto correction processing, while the other hasn't. In such cases an initial comparison step, followed by an optional preprocessing step, can ensure both images to be similar again, such that they can undergo the similar segmentation operations. In other embodiments however this preprocessing step is not performed, such that the segmentation operations on both images are using different criteria to take into account these initial differences.

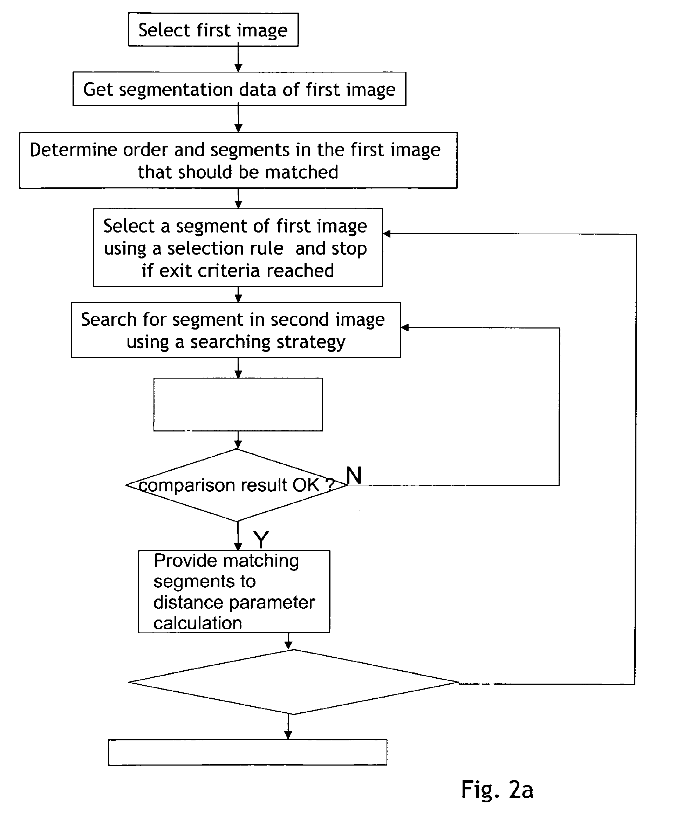

The resulting segmentation data, denoted S1 and S2 for the respective images I1 and I2, will be compared with each other during a segment matching operation. A high level embodiment for performing such an operation is shown in Fig. 2A. First all segments in the first image that should be matched are to be determined. In some embodiments, e.g. 3D surface reconstruction, all segments of the first image are to be matched, but there are other applications, e.g. gesture recognition using an existing segmentation tree for which only segments at the highest hierarchical layers are to be matched with segments from the other image After this determination one of these segments is selected for performing a matching operation with another segment in the segmentation file of the second image. The selection itself relates to the order with which respective segments of the first file are considered. The matching operation further involves a search operation in the other segmentation file of the other image to find a best matching segment. This search is based on a searching strategy which implies or refers to the selection with which the different segments in the other segmentation file S2 are scanned through for comparison with the selected segment of the first segmentation file S1.

Once such a segment is selected from the second segmentation file S2, it is compared with the selected segment of the first segmentation file S1. The comparison itself can be based on a metric that indicates the resemblance of the 2 segments. Many options are available for this such as comparison of segment size expressed in number of pixels, the average segment colour, the axis of least inertia, or the smallest bounding box or any combination of these or other criteria. For finding a matching segment, the result of this comparison operation has then to be sufficiently good, which can e.g. be expressed as exceeding a predetermined limit value. The result of this comparison may also be denoted as a matching score which e.g. has to exceed a predetermined threshold value for being representative of a sufficiently good matching between both segments. If this matching score if then sufficiently high, this thus indicates both segments sufficiently match, and this indicates that a matching segment in the second file is found. The matching segments are provided to the next stage, being the distance parameter calculation itself, which will be further discussed in further paragraphs. In case the comparison result was not good enough, another segment of the second segmentation file S2 has to be searched, in accordance to the searching strategy, for again performing the comparison operation. After a matching segment for the segment of the first image is found, a next segment of the first image is selected, taking into account the determined order.

In other implementations first all candidate segments within the second image are compared with the segment of the first image under consideration, and then the best matching of all candidates is selected as the matching segment. And in yet other implementations all sufficiently good comparison results, together with all potential matching segments are kept, together with their matching scores, for allowing further probabilistic calculations of the distance parameters themselves.

The selection of the segment of the first segmentation file is thus based upon a selection rule which is in many cases itself also related to the segmentation process itself of the first image. In case this segmentation is represented as a tree structure, such as was the case in Figs 7a and 7b, individual segments can be selected going from top to bottom in this tree structure, so starting at the highest hierarchical level , being level 0, and going then down to the lower levels (in this case level 2).

In case the segmentation of the first image is represented by a graph structure this top-down hierarchical structure is no longer present such that the selection rules can involve a search with distance restrictions with regards to the starting node; e.g. only nodes that lie on a distance of maximum 2 from the starting node.

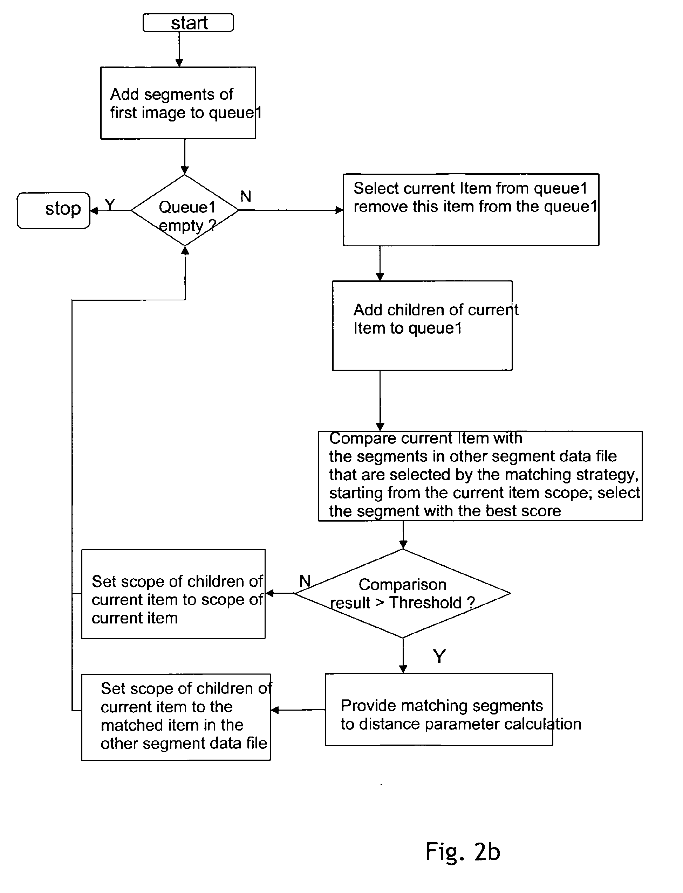

A possible embodiment for implementing the method of fig. 2a on segmentations represented as tree structures is shown in Fig 2b. This embodiment starts with placing the top-level segments, meaning those at the highest hierarchical level, from the first image in a queue. The queue is checked for containing one or more items at this level. In an initial stage the queue will not be empty, and one of the items, being one of the segments at this highest level, will be selected for performing a comparison operation. This segment is denoted "current item" in Fig. 2b. Upon selecting this as the "current item", this segment is removed from the queue, for later enabling other segments to be compared. After this removal all lower level segments, related to the current item, but at a lower hierarchical level, often denoted as "children" segments are added to the queue. The current item is then compared with a subset of the segments in the other segmented file associated to the other image. The subset of segments depends on the associated scope of the current item and the chosen matching strategy, which in this example involves searching the tree at the current level from top to Another internal variable is used to this purpose, this variable being denoted the "current item scope", and representing a segment in the other segmentation file which acts as the starting point for finding a match. The searching strategy will then define how the tree is (partially) traversed starting from this scope, selecting items with which the current item should be compared in order to find the best match. As mentioned this comparison can take various criteria into account such as similarity of colour, segment size, bounding boxes and the axis of least inertia. The comparison criteria can also vary from hierarchical layer, for better taking into account noise degradation of some of the pixel values in these layers.

The result of this comparison will then be judged against a predetermined threshold, corresponding to a certain value within a range, which itself can also still vary depending on the level of the segmentation of the segment under consideration. In case the matching score was high enough, meaning that the comparison result exceeded e.g. this threshold value, the match, comprising the two matching segments, is provided to the distance parameter calculation. Furthermore the "current item scope "of the children of the current item is set to the matched segment in the other segmentation tree. This enables the search for matches for these children can begin at a segment with high probability of finding a match (since its parent matched with the scope, the chance is high that the children will match with segments in the sub-tree of the scope). In case the matching score was not high enough, the scopes of the children of the current item is set to the scope of the current item itself (the scope could not be refined because of the insufficient match).

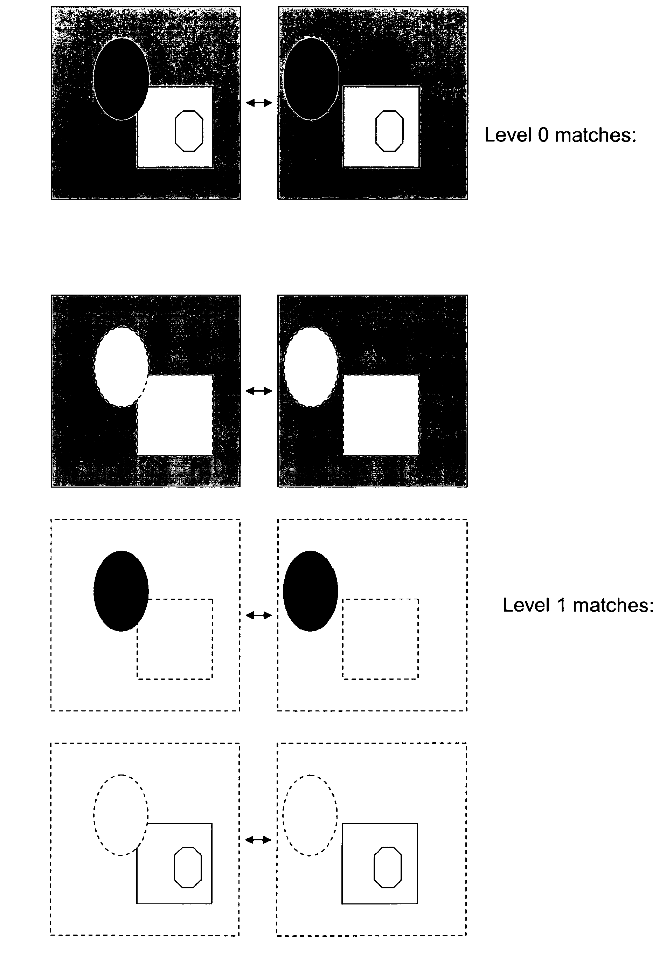

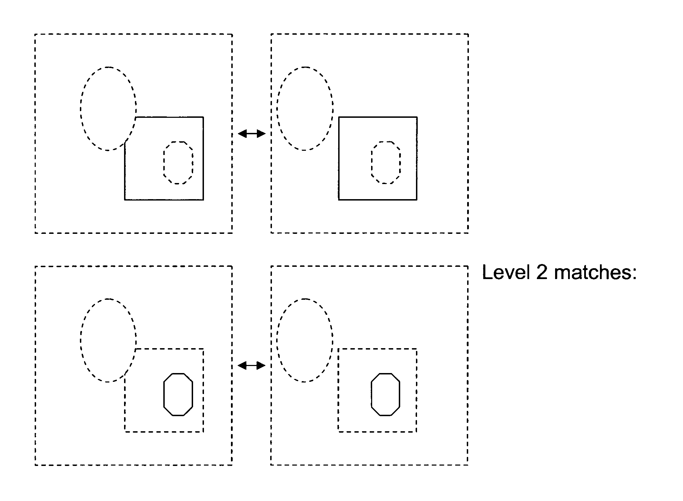

At the end of the segment matching operation, a set of matches, being a set of matching segments from both images, will be provided. This is illustrated in fig 7c showing the different matches at the different hierarchical levels for the examples of figs 7a-b.

At the highest level, being level 0, a set comprising 1 pair of segments comprising the original images will be provided. At one level below, being level 1 a set comprising 3 pairs of segments and at the lowest level 2, a set comprising 2 pairs of segments will be provided. At level 0 the match comprises the images itself, at level the first match thus comprises two segments, corresponding to the grey background segments in both images, the second match comprises two segments, corresponding to the black circles in both images, and a third match comprises the rectangles with the blocked octagons in both images. As level 2, a first match comprises the rectangles without the octagons, and another match comprises the octagons themselves.

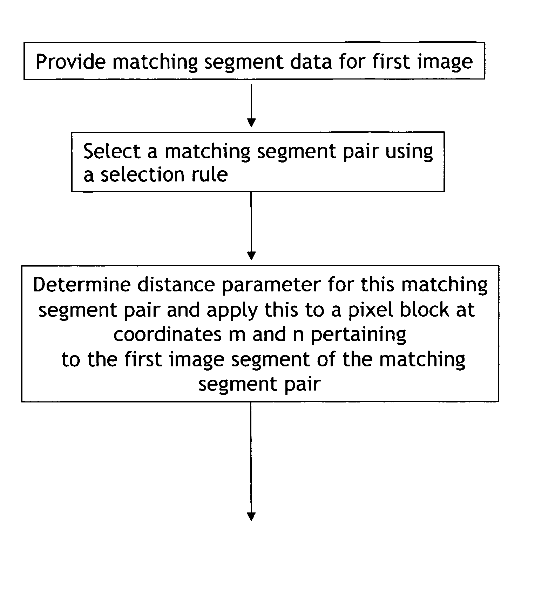

These set comprising 6 matches will then be provided to the distance parameter determination module of Fig. 1. A schematic set of steps for performing this module is shown in Fig. 3a. It comprises providing all matches for the first image, and, for each match calculating the distance parameter, which is then applied to all or some of the pixels or pixel blocks pertaining to this segment under consideration. The distance parameter itself can be calculated based upon a calculation of the center of gravity of the two matching segments, and determining the pixel distance between these gravity centers' coordinates. Other methods are of course also possible such as using the difference between the intersections of the diagonals of the smallest bounding boxes around the two segments, which will again define two pixel coordinates in both images between which the distance can be calculated. And other attributes are possible as reference points within or associated to the matching segments, and from which pixel coordinates the distance value can be derived.

As some pixels pertain to several segments, possibly at different hierarchical levels, it can be important to also take this into account. In some embodiments a set of distance values, calculated for individual pixels related to the segments may be kept, in other applications it may be advantageous to only keep one "final" distance value per pixel or pixel block. This is called a merged representation. When creating such a merged representation of the distance values , thus resulting in one distance per pixel, another selection rule determines the order with which the segments are handled, making sure the output is generated as the application demands. Alternatively, as previously mentioned, the distance values relating to the various segments can be output as such, without applying the merge operation. In this case the segments and its interrelations are output along with the corresponding distance values. This enables using several distance maps at difference levels, which may e.g. ease some pattern recognition techniques by first recognizing large segments such as a person on the low-detail disparity map, followed in a later stage further looking at the details of this person.

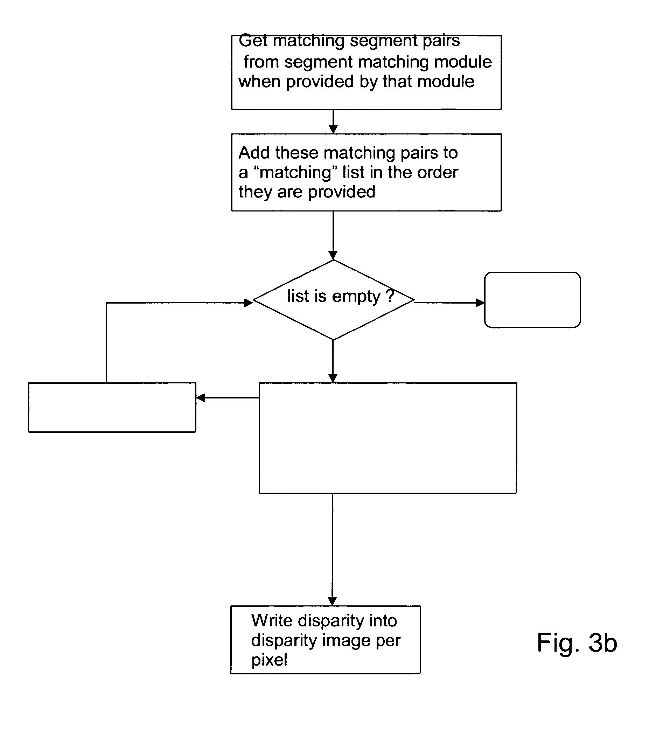

A possible implementation for realizing the method shown in Fig. 3a is shown in Fig. 3b. The individual matching results for the individual matches are added to another queue in chronological order, meaning that the matches of the highest hierarchical layers are first input to the list, and will be followed by matches at lower hierarchical layers, and the list will be followed in that order. This guarantees that the highest hierachical segment results will be overwritten by those of the lower segments, leading to a merged desired pixel distance for the pixels or pixel blocks under consideration.

In some embodiments , the results for the distance parameters will be written into a file with as many pixels as the original image, and for which each pixel is attributed with a distance parameter. In other embodiments this will only be done for a reduced set of pixels or pixel blocks.

Embodiments of the method will now be explained for the calculation of motion vectors between moving images on one hand, and for the calculation of disparity values between stereo images on the other hand.

Motion vectors are used in context of video encoding and decoding, and in this context the wording "frame" denotes an image or picture taken by a camera at a particular instance in time. Motion vectors are used to characterize the evolution of several images as a function of time. To this purpose the difference between an item in the current frame and in one or more reference frames is identified. The selection of which image or frame will become a reference frame is part of the encoding process itself. Fig. 4 shows an example embodiment for a reference frame and the current frame of which the motion vectors need to be calculated.

During traditional motion vector calculation the current frame is divided into blocks, called macroblocks. These macroblocks can be of different sizes, varying from e.g. 16x16 pixels to 4x4 pixels, depending on whether a good match can be found for the block in the current frame with this particular block size, and a corresponding block of the same dimensions in the reference frame. Prior art motion vectors are obtained as the pixel distance between the position of the current block in the current frame and the position of the best matching block of the same size and dimensions and orientation in the reference frame. The position of both blocks may be determined by means of their coordinates, and the motion vector generally denotes the distance or difference, expressed in number of pixels in the horizontal and vertical direction, between these coordinates. The computation of such motion vectors is part of almost all current video compression schemes, and is thus incorporated in almost all video encoders.

According to embodiments of the method, the coordinates of the blocks will now be related to the coordinates of attributes of the segments the blocks belong to, such as the center of gravity coordinates of these segments, as previously explained.

In accordance to an embodiment of the method, the motion vector will thus be determined by first submitting both the reference image and the image to be compared with to a segmentation step such as shown in Fig. 2a. The reference frame from the encoding process is taken as the second image, whereas the first image corresponds to the frame for which the motion vectors are to be calculated with respect to the reference frame.

This is shown in Fig. 4, which further shows that the next steps again involve the segment matching and the motion vector calculation. Segment matching criteria in case of motion vector calculation can focus more on obtaining matching segments that result in a low residual values during the subsequent encoding process using the selected block size rather than purely using the shape metrics. To obtain such low residual values it can be e.g. advantageous to focus on color similarity as these generally will result in lower residual values.

Motion vectors will in this case be calculated for macroblocks of a certain predetermined size. Because motion vectors are not needed for all pixels, but mainly for macroblocks, one can reduce the amount of work by only performing the segmentation with focus on the relevant or central pixels of the macroblocks , calculating the matches for these relevant segments and determining the distance parameters back for the relevant pixels of the macroblocks .

The method can as well be used for other applications, such as e.g. for the calculation of disparity values which are used during analysis of stereo images. This is shown in Fig. 5. In this case in general two still images, one coming from a left camera, and another from a right camera are provided. In this case either one can be selected as the first or second image.

Preferential segment matching strategies involve matching on a hierarchical basis, and matching and refining objects using this hierarchical segmentation. Asserting the match quality employs a combination of different metrics, possibly executed in a combination of sequential and parallel deciders. Not all metrics have to be necessarily evaluated for a certain match in the sequential case. A metric can already reject a match, resulting in the admission of the following metrics. In addition, parallel execution and aggregation of other metrics can also be used in order to assert the matching quality. Refining a match is done by matching sub-segments of the previous match.

For this application the disparity value is generally calculated for all pixels of the first image I1, which will eventually result in the generation of a disparity map, representing the disparity value for all pixels of the first image. By using the segment matching, the edges of the original images are maintained, which is important for use cases as 3D geometry extraction and object recognition. The disparity map corresponds to the depth map for stereo input.

Fig. 6 shows an arrangement for performing the methods previously explained. This arrangement comprises at least two inputs for receiving respective input images, and is further adapted to divide said respective images into at least one segment in accordance to respective predetermined segmentation criteria, to compare at least one segment of the first image with at least one segment of said other image such as to derive from said comparison the distance parameter for at least one pixel block comprised within said at least one segment of said first image and to provide said distance parameter at an output of said arrangement. The embodiment of Fig. 6 shows different modules for performing these operations, but embodiments wherein these are performed by one single processing means, are also possible.

While the principles of the invention have been described above in connection with specific apparatus, it is to be clearly understood that this description is made only by way of example and not as a limitation on the scope of the invention, as defined in the appended claims.

## Claims

1. Method for determining a distance parameter ( d (m,n)) for at least one pixel block comprised in a first image (F1) with respect to at least one other image (F2), said method including a step of dividing said respective images into at least one segment in accordance to respective predetermined segmentation criteria, a step of comparing at least one segment of the first image with at least one segment of said other image such as to derive from said comparison the distance parameter (d(m,n)) for at least one pixel block comprised within said at least one segment of said first image.

2. Method according to claim 1 wherein the step of comparing the segments of said images is performed in accordance with a predetermined segment matching strategy taking into account interrelationships between segments within the respective images.

3. Method according to claim 1 or 2 wherein said distance parameter (d(m,n)) is calculated as the pixel distance between corresponding predetermined attributes of at least one set of matching segments from each image, said set of matching segments resulting from said comparison step.

4. Method according to claim 3 whereby said corresponding predetermined attributes are related to the center of gravity of said matching segments.

5. Method according to any of the claims 2 to 4 whereby said segment matching strategy involves a searching strategy and a comparison criterion strategy.

6. Method according to any of the previous claims 1 to 5 further including an initial comparison step of said images which result is used for optimizing said segmentation operation.

7. Method according to claim 6 further including a preprocessing step on at least one of said images depending upon the result of said comparison of said images.

8. Method in accordance to any of the previous claims 1 to 7, **characterized in that** said method is used for calculating of a motion vector during encoding of a video stream.

9. Method in accordance to any of the previous claims 1 to 7, **characterized in that** said method is used for calculating a disparity parameter during processing of stereo images.

10. Method according to any of the previous claims 1 to 7 wherein said steps are repeated for all pixel blocks within said first image.

11. Arrangement (A) for determining a distance parameter (mv(m,n) ; d (m,n)) for at least one pixel block (m,n) comprised in a first image (F1 with respect to at lease one second image (F2), said arrangement being adapted to receive said first and said at least one second image, and to divide said respective images into at least one segment in accordance to respective predetermined segmentation criteria, to compare at least one segment of the first image with at least one segment of said other image such as to derive from said comparison the distance parameter for at least one pixel block comprised within said at least one segment of said first image and to provide said distance parameter at an output of said arrangement.

12. Arrangement (A) according to claim 11 further including means adapted to perform any of the steps in accordance to claims 1 to 7

13. Video encoding apparatus **characterized in that** it comprises an arrangement according to claim 11 or 12.

14. Stereo image processing apparatus **characterized in that** it comprises an arrangement according to claim 11 or 12.
